# EUROPÄISCHE PATENTSCHRIFT

(11) **EP 0 836 981 B1**
(45) Veröffentlichungstag und Bekanntmachung des Hinweises auf die Patenterteilung: **01.12.1999**
(21) Anmeldenummer: 97117224.2
(22) Anmeldetag: 04.10.1997
(51) Int. Cl.: B62D 1/18

(54) **Vorrichtung an einer Lenksäule für Kraftfahrzeuge zur Längen- und Neigungsverstellung**
Device for adjusting the length and the inclination of a motor vehicle steering column
Dispositif de réglage de la longueur et de l'inclinaison d'une colonne de direction pour véhicules à moteur

(30) Priorität: 19.10.1996 DE 19643203
(43) Veröffentlichungstag der Anmeldung: 22.04.1998
(73) Patentinhaber: ETABLISSEMENT SUPERVIS, FL-9490 Vaduz (LI)
(72) Erfinder: Schelling, Raymond, 7320 Sargans (CH); Verling, Heike-Michael, 9487 Gamprin (FI)
(74) Vertreter: Hefel, Herbert, Dipl.-Ing.

(56) Entgegenhaltungen:
- EP-A- 0 341 078
- EP-A- 0 440 403
- DE-C- 3 619 125
- DE-C- 19 542 472

## Beschreibung

Die Erfindung bezieht sich auf eine Vorrichtung an einer Lenksäule für Kraftfahrzeuge zur Längen- und/oder Höhen- bzw. Neigungsverstellung mit den Merkmalen des Oberbegriffes des Patentanspruches 1.

Vorrichtungen dieser Art sind in verschiedenen Ausführungsformen bekanntgeworden, beispielsweise ist eine solche Vorrichtung in der EP 341 078 A offenbart. Der Erfindung liegt nun die Aufgabe zugrunde, diese Vorrichtung so konstruktiv auszubilden, daß mit einem einzigen Betätigungshebel die Länge der Lenksäule und ihre Höhenlage bzw. Neigung einstellbar ist, im Crashfall jedoch sich nur die Lenksäule axial verschiebt und dies unter Beibehaltung der eingestellten Höhen- oder Neigungslage. Zur Lösung dieser Aufgabe schlägt die Erfindung jene Merkmale vor, die Inhalt und Gegenstand des kennzeichnenden Teiles des Patentanspruches 1 sind. Dank dieses Vorschlages verlaufen über den Betätigungshebel zwei getrennte Kraftschlußkreise, von denen der eine über die Rohrachse (Höhen- bzw. Neigungsverstellung) und der andere (Längenverstellung) über eine Sollbruchstelle führt.

Zur Veranschaulichung der Erfindung wird diese anhand zweier Ausführungsbeispiele näher erörtert, ohne dadurch die Erfindung auf diese gezeigten Ausführungsbeispiele einzuschränken. Es zeigen:
- Fig. 1: einen Querschnitt und die
- Fig. 2: einen Längsschnitt - Schnittlinie II-II in Fig. 1 - durch ein erstes Ausführungsbeispiel;
- Fig. 3: einen Querschnitt und
- Fig. 4: einen Längsschnitt - Schnittlinie IV-IV in Fig. 3 - durch ein zweites Ausführungsbeispiel;
- Fig. 5: das eine Profilstück in Untersicht;
- die Fig. 6, 7 und 8: eine der beiden Kulissen in Draufsicht, Seitensicht und Ansicht;
- Fig. 9: ein Detail der Führungsschiene;
- Fig. 10: in Schrägsicht die zweite Kulisse;
- Fig. 11: den unteren Teil des zweiten Profilstückes in Draufsicht.

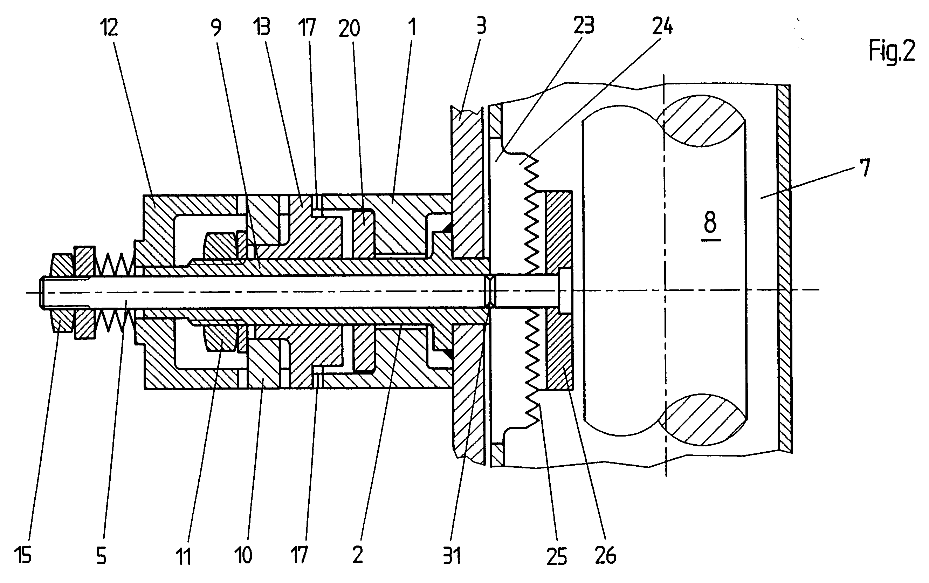

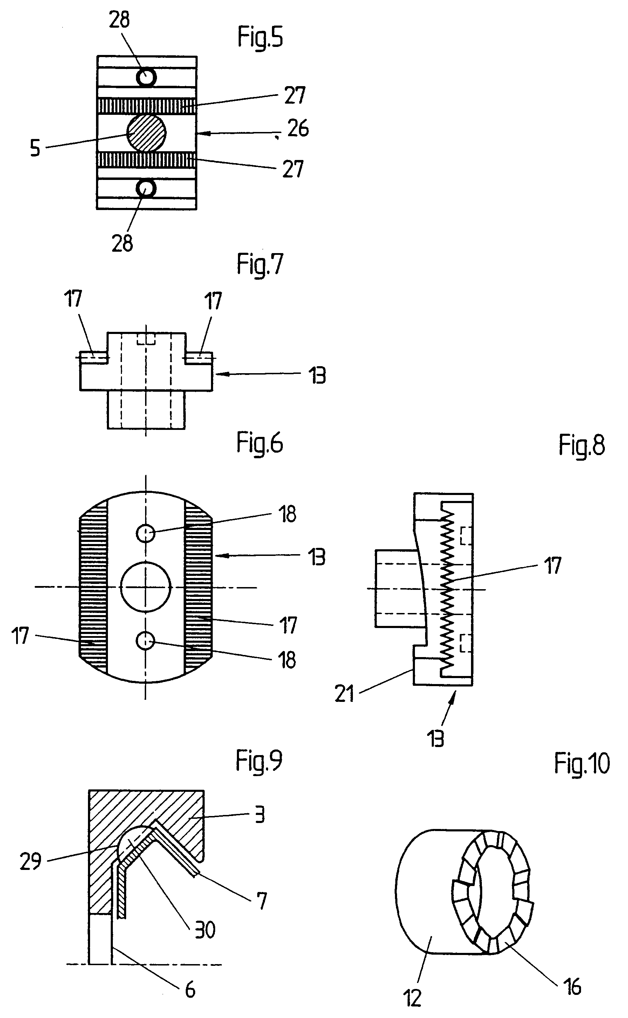

An einem chassisfesten Bauteil 1 mit einer vertikalen Langlochausnehmung 2, der einen im wesentlichen H-förmigen Querschnitt (Fig. 2) hat, liegt an dessen einen Seite eine Führungsschiene 3 an, die um eine hinter der Zeichenebene liegenden Achse in einer rechtwinkelig zur Zeichenebene stehenden Ebene um einige Winkelgrade verschwenkbar ist. Diese Achse liegt parallel zur Achse 4 des Bolzens 5. Diese Führungsschiene 3 besitzt eine hinterschnittene Führungsnut 6, die ein Mantelrohr 7 aufnimmt, in welchem eine längenveränderbare Lenkspindel 8 gelagert ist, die hier nur angedeutet ist. Dieses Mantelrohr 7 besitzt einen seitlichen, trapezartigen Ansatz, der von der Führungsnut 6 formschlüssig übergriffen ist. An dieser Führungsschiene 3 ist eine Rohrachse 9 festgelegt, die die Langlochausnehmung 2 im chassisfesten Bauteil 1 durchsetzt. Auf dieser Rohrachse 9 ist ein um diese verschwenkbarer Betätigungshebel 10 gelagert. Dieser Betätigungshebel 10 liegt einseitig an einem hier als Mutter ausgebildeten Anschlag 11 an, der mit der Rohrachse 9 fest verbunden ist. Zu beiden Seiten dieses Betätigungshebels 10 sind Kulissen 12 und 13 vorgesehen, die auf der Rohrachse 9 axial verschiebbar, aber gegen Verdrehung gesichert sind. Die eine topfartig ausgebildete Kulisse 12 (Fig. 10) ist über ein Federpaket 14 gegen einen Anschlag 15 abgestützt, der seinerseits fest mit dem Ende des Bolzens 5 verbunden ist, der in der Rohrachse 9 liegt und der mit seinem einen Ende aus dieser Rohrachse vorkragt. Die Stirnseite 16 (Fig. 10) dieser topfartigen Kulisse 12 ist mit Schrägflächen bestückt, die an korrespondierenden Schrägflächen des Betätigungshebels 10 anliegen, so daß eine Verdrehung des Betätigungshebels 10 um die Achse 4 eine Axialverschiebung der Kulisse 12 auf der Rohrachse 9 bewirkt.

Die zweite Kulisse 13, die auf der Rohrachse 9 axial verschiebbar, gegenüber dieser jedoch verdrehgesichert ist, besitzt zwei Zahnleisten 17 (Fig. 6) und zwischen den Zahnleisten Bohrungen 18, die hier Federn 19 aufnehmen, die sich mit ihrem einen Ende an einem Gleitteller 20 abstützen, der seinerseits am chassisfesten Bauteil 1 anliegt. Die dem Betätigungshebel 10 zugewandte Stirnseite dieser Kulisse 13 ist ebenfalls mit Schrägflächen bestückt, die an dazu korrespondierenden Schrägflächen am Betätigungshebel 10 anliegen. Diese stirnseitigen Schrägflächen an den beiden Kulissen 12 und 13 und am Betätigungshebel 10 sind so ausgebildet, daß durch die Verschwenkung des Betätigungshebels 10 in eine Richtung die beiden Kulissen von diesem Betätigungshebel 10 weggedrängt oder weggeschoben werden. Die Zahnleisten 17 der Kulisse 13 greifen in Zahnleisten 22 ein, die am chassisfesten Bauteil 1 angeordnet sind.

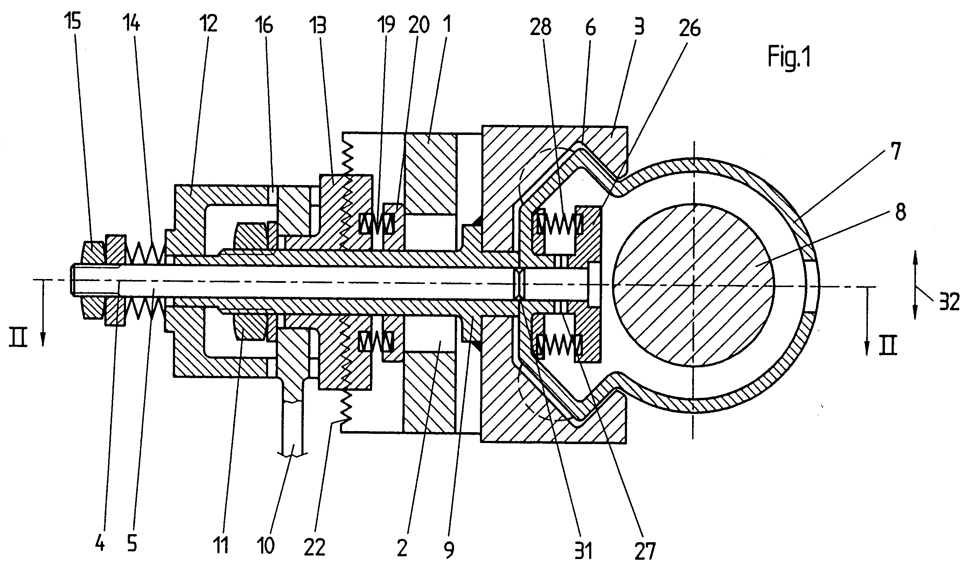

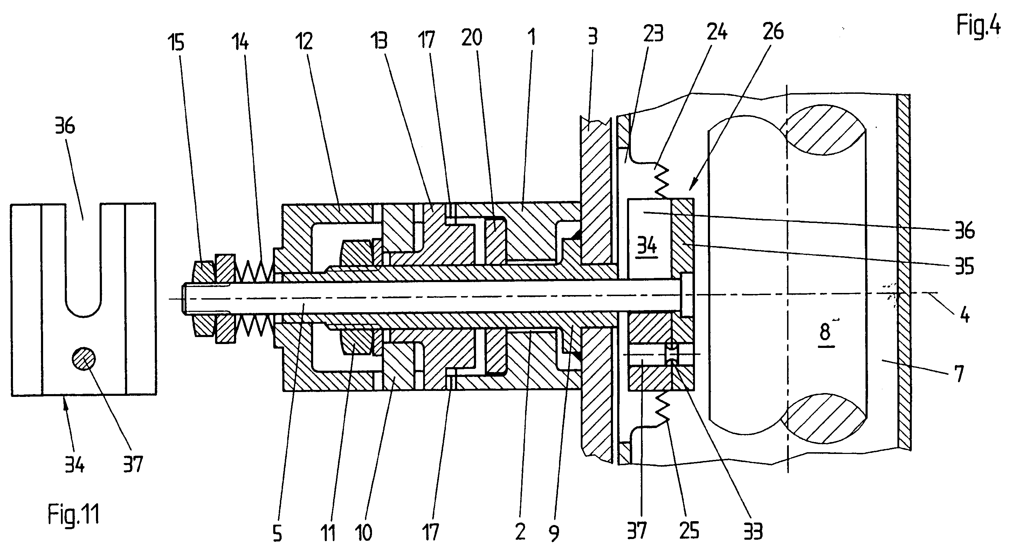

Im Mantelrohr 7, und zwar in dem von der Führungsnut 6 aufgenommenen Abschnitt, ist eine in Längsrichtung des Mantelrohres 7 verlaufende Langlochausnehmung 23 ausgespart, deren Ränder 24 zum Inneren des Mantelrohres 7 hin umgebogen sind, wobei diese Ränder eine Zahnung 25 besitzen. Der Bolzen 5, der durch diese Langlochausnehmung 23 in das Innere des Mantelrohres 7 ragt, ist mit einem Profilstück 26 verbunden, das einen im wesentlichen T-förmigen Querschnitt (Fig. 1) hat, wobei an der Unterseite dieses Profilstückes 26 (Fig. 5) Zahnleisten 27 angeformt sind, die mit der Zahnung 25 an den Längsrändern 24 kämmen. Zwischen den auskragenden Schultern dieses Profilstückes 26 und der Innenseite des Mantelrohres 7 sind vorgespannte Federn 28 angeordnet (Fig. 1).

In den Flanken der Führungsnut 6 (Fig. 9) sind kugelschalenartige Vertiefungen ausgespart, in welchen Kugelkalotten 30 liegen, die als Auflager für das Mantelrohr 7 dienen. In der inneren Mündungsebene der Rohrachse 9 besitzt der Bolzen 5 eine Sollbruchstelle 31.

In der betriebsmäßigen Stellung ist der Betätigungshebel 10 in einer solchen Lage, daß die beiden Kulissen 12 und 13 von ihm weggedrückt sind, die Kulisse 12 nach links, die Kulisse 13 nach rechts. Dadurch sind die Verzahnungen des Bauteiles 1 und der Kulisse 13 unter Vorspannung der Feder 19 fest aneinandergedrückt. Andererseits zieht die Kulisse 12 über das Federpaket 14 und den Anschlag 15 den Bolzen 5 mit der Sollbruchstelle 31 nach links und drückt dabei das Profilstück 26 bzw. dessen Zahnleisten 27 in die Zahnung 25 der Ränder 24 der Langlochausnehmung 23 des Mantelrohres 7. Damit ist die Lenksäule, bestehend aus Mantelrohr 7 und Lenkspindel 8, gegenüber dem chassisfesten Bauteil 1 verspannt.

Soll die Lenksäule in ihrer Länge (rechtwinkelig zur Zeichenebene in Fig. 1) und/oder in ihrer Neigung (Pfeil 32 - Fig. 1) verstellt werden, so wird der Betätigungshebel 10 verschwenkt (rechtwinkelig zur Zeichenebene in Fig. 1), wodurch die Kulissen 12 und 13 in axialer Richtung Spiel erhalten, so daß die Vorspannung der Federn 19 bzw. 28 wirksam wird mit der Folge, daß die bislang in Eingriff miteinander stehenden Verzahnungen außer Eingriff gelangen. Nun kann das Mantelrohr in seiner Führungsnut 6 verschoben werden bzw. kann die Führungsschiene 3 um ihre hinter der Zeichenebene liegende Achse verschwenkt werden (Pfeil 32). Die nun von den erwähnten Teilen eingenommene Lage wird dadurch arretiert, daß der Betätigungshebel 10 wiederum in seine Ausgangslage zurück verschwenkt wird und dabei die Kulissen 12 und 13 von ihm wegdrängt, wodurch unter neuerlicher Vorspannung der Federn 19 und 28 die Zahnungen wieder in Eingriff gelangen.

Wirkt auf die Lenksäule axial eine unfallverursachte Kraft ein, so wird die Sollbruchstelle 31 des Bolzens 5 abgeschert und die Lenksäule verschiebt sich in der Führungsnut 6 in ihrer Längsrichtung, wobei jedoch die eingestellte Neigungslage unverändert beibehalten wird.

Beim besprochenen und gezeigten Ausführungsbeispiel nach den Figuren 1 und 2 ist die Sollbruchstelle 31 durch die auf den Bolzen 5 einwirkende axiale Spannkraft belastet.

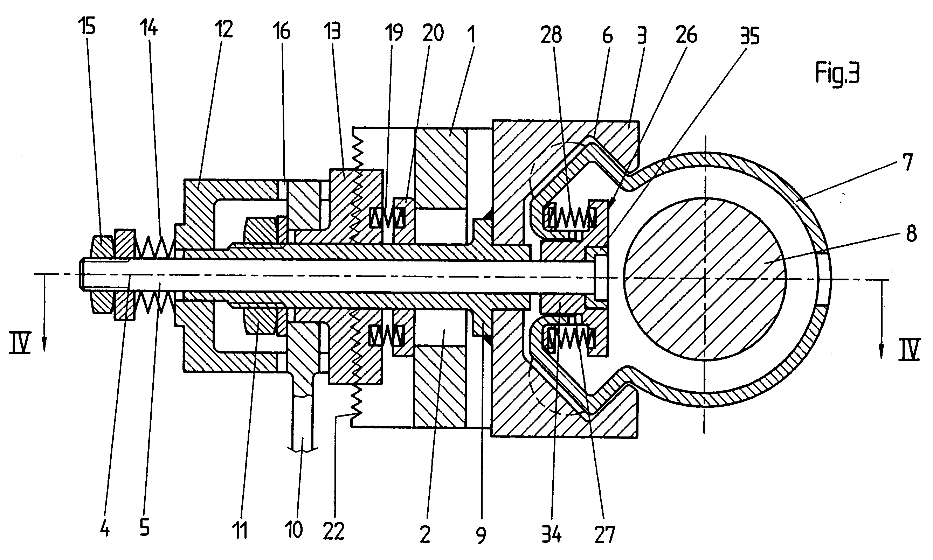

Beim Ausführungsbeispiel nach den Figuren 3 und 4 ist die hier vorgesehene Sollbruchstelle 33 unbelastet. Dieses Ausführungsbeispiel unterscheidet sich vom besprochenen durch die Ausbildung des Bolzens 5, der hier über seine gesamte Länge einen einheitlichen Querschnitt hat, und durch die Ausbildung des Profilstückes 26. Dieses besteht aus einem U-förmigen Unterteil 34 (Fig. 11) und einem plattenförmigen Oberteil 35, wobei diese beiden Teile durch einen Scherbolzen 37 mit der Sollbruchstelle 33 verbunden sind, wobei diese Sollbruchstelle 33 in der Trennebene dieser beiden Teile liegt. Die Achse des Bolzens 5, die des Scherbolzens 37 und die Längsachse der einseitig offenen Öffnung 36 liegen dabei zweckmäßig in einer Ebene. Die Sollbruchstelle 33 ist bei dieser konstruktiven Ausgestaltung unbelastet, und zwar unabhängig davon, wie stark der Bolzen 5 gespannt ist.

In den gezeigten Ausführungsbeispielen sind die Federn 19 und 28 als Schraubenfedern ausgebildet. Es liegt im Rahmen der Erfindung, hier auch Blattfedern vorzusehen, die einfacher zu führen sind als Schraubenfedern. Von der Ausgestaltung des Profilstückes 26 und des Bolzens 5 abgesehen entsprechen einander die beiden gezeigten Ausführungsbeispiele, aus welchem Grund gleiche Teile auch mit gleichen Hinweisziffern versehen wurden.

Im gezeigten Ausführungsbeispiel sind zu beiden Seiten des Betätigungshebels 10 Kulissen 12, 13 vorhanden, die zum Anziehen bzw. Lösen des Bolzens 5 dienen, um die Verzahnungen in oder außer Eingriff zu bringen.

Diese Betätigungseinrichtung für diesen Zweck kann auch anders ausgestaltet sein, beispielsweise kann nur eine Kulisse auf einer Seite des Betätigungshebels angeordnet werden. Anstelle von Auflaufflächen, die direkt aneinander anliegen, können zwischen den Schraubflächen Rollkörper vorhanden sein. Die Anordnung ist in allen Fällen so zu treffen, daß durch eine Schwenkbewegung des Betätigungshebels 10 um die Achse des Bolzens 5 ein auf der Rohrachse 9 gelagerter Konstruktionsteil axial verschoben wird. Einrichtungen dieser Art sind beispielsweise aus EP 600 700 A1 oder GB 2 092 966 A bekannt.

## Patentansprüche

1. Vorrichtung an einer Lenksäule für Kraftfahrzeuge zur Längen- und/oder Neigungsverstellung derselben mit einem eine Lenksäule aufnehmenden Mantelrohr (7), das formschlüssig an einer Führungsschiene (3) in Längsrichtung verschiebbar gelagert ist, wobei die Führungsschiene (3) um eine quer zum Mantelrohr (7) liegende Achse verschwenkbar ist, die an einem am Chassis des Kraftfahrzeuges angeordneten Bauteil (1) festgelegt ist, dadurch gekennzeichnet, daß quer zum Mantelrohr (7) an der Führungsschiene (3) eine Rohrachse (9) festgelegt ist, in der ein in das Mantelrohr (7) ragender Bolzen (5) liegt, wobei der Bolzen (5) durch eine im Mantelrohr (7) vorgesehene, parallel zur Achsrichtung des Mantelrohres sich erstreckende Langlochausnehmung (23) ragt, deren Längsränder (24) gezahnt sind und am inneren Ende des Bolzens (5) ein gegen die Kraft mindestens einer vorgespannten Feder (28) mit den gezahnten Längsrändern (24) kämmendes Profilstück (26) vorgesehen ist und an der Rohrachse (9) ein Betätigungshebel (10) gelagert ist, durch dessen Betätigung mindestens eine Kulisse (12, 13) in Richtung der Rohrachse (9) verschiebbar ist und diese Kulisse (13) auf der dem Mantelrohr (7) zugewandten Seite mindestens eine Zahnleiste (17) aufweist, die mit einer am feststehenden Bauteil (1) vorgesehenen Zahnleiste (22) kämmt.

2. Vorrichtung nach Anspruch 1, dadurch gekennzeichnet, daß der Betätigungshebel (10) um die Rohrachse (9) verschwenkbar ist.

3. Vorrichtung nach Anspruch 1, dadurch gekennzeichnet, daß zu beiden Seiten des Betätigungshebels (10) auf der Rohrachse (9) gelagerte und in Richtung deren Achse durch die Verschwenkung des Betätigungshebels (10) verschiebbare Kulissen (12, 13) vorgesehen sind, wobei die eine, dem Mantelrohr (7) abgewandte Kulisse (12) mit dem einen Ende des Bolzens (5) verbunden ist.

4. Vorrichtung nach Anspruch 1, dadurch gekennzeichnet, daß die Rohrachse (9) eine vertikale Langlochausnehmung (2) im feststehenden Bauteil (1) durchsetzt und beidseitig dieser Langlochausnehmung (2) vertikal verlaufende Zahnleisten (22) vorgesehen sind, die mit den Zahnleisten (17) kämmen, die an der zweiten Kulisse (13) vorgesehen sind und die Zähne dieser Zahnleisten (17, 22) gegen die Wirkung mindestens einer vorgespannten Feder (19) ineinandergreifen.

5. Vorrichtung nach Anspruch 1 oder 2, dadurch gekennzeichnet, daß der an der Rohrachse (9) schwenkbar gelagerte Betätigungshebel (10) auf seiner dem Mantelrohr (7) abgewandten Seite an einem an der Rohrachse (9) festgelegten Anschlag (11) anliegt.

6. Vorrichtung nach Anspruch 1, dadurch gekennzeichnet, daß das eine Ende des Bolzens (5) gegenüber der Rohrachse (9) vorsteht und dieses vorstehende Ende einen Anschlag (15) trägt und zwischen diesem Anschlag (15) und der ersten Kulisse (12) ein Federpaket (14) angeordnet ist.

7. Vorrichtung nach Anspruch 1, dadurch gekennzeichnet, daß die dem Betätigungshebel (10) zugewandten Stirnseiten (16, 21) der beiden Kulissen (12, 13) zumindest teilweise als Schraubflächen ausgebildet sind und der Betätigungshebel (10) Nocken oder Rollen aufweist, die an diesen Schraubflächen anliegen und bei der Verschwenkung des Betätigungshebels (10) an diesem entlanglaufen.

8. Vorrichtung nach Anspruch 1, dadurch gekennzeichnet, daß im Bereich des Mantelrohres (7) eine Sollbruchstelle (31, 33) vorgesehen ist, die die formschlüssige Verbindung zwischen Mantelrohr (7) und Bolzen (5) bei einer auf die Lenksäule axial einwirkenden, unfallverursachten Kraft unterbricht.

9. Vorrichtung nach Anspruch 8, dadurch gekennzeichnet, daß die Sollbruchstelle (31) am Bolzen (5) vorgesehen ist und in der Ebene des inneren Endes der Rohrachse (9) liegt.

10. Vorrichtung nach Anspruch 1 oder 8, dadurch gekennzeichnet, daß das am inneren Ende des Bolzens (5) vorgesehene Profilstück (26) zweiteilig ausgebildet ist, wobei der eine Teil (34) gezahnt ist und mit den gezahnten Längsrändern (24) kämmt, wobei von seiner inneren Stirnseite eine den Bolzen (5) aufnehmende Öffnung (36) ausgeht und der andere mit dem Bolzen verbundene Teil (35) auf dem ersten Teil (34) aufliegt und diese beiden Teile (34, 35) durch einen zum Bolzen (5) parallel liegenden Scherbolzen (37) verbunden sind.

11. Vorrichtung nach Anspruch 10, dadurch gekennzeichnet, daß die Achse des Bolzens (5), die des Scherbolzens (37) und die Längsachse der einseitig offenen Öffnung (36) in einer Ebene liegen.

12. Vorrichtung nach Anspruch 1, dadurch gekennzeichnet, daß die gezahnten Längsränder (24) der Langlochausnehmung (23) im Mantelrohr (7) gegen die Innenseite des Mantelrohres (7) gebogen sind.

13. Vorrichtung nach Anspruch 1, dadurch gekennzeichnet, daß das Mantelrohr (7) einen im Querschnitt trapezartigen, seitlichen Ansatz aufweist, der von der Führungsschiene (3) formschlüssig aufgenommen ist.

14. Vorrichtung nach Anspruch 1, dadurch gekennzeichnet, daß in der Führungsschiene (3) kugelschalenartige Vertiefungen (29) ausgespart sind, in welchen Kugelkalotten (30) liegen, an deren ebenen Kreisflächen der von der Führungsschiene (3) aufgenommene Ansatz des Mantelrohres (7) anliegt.

15. Vorrichtung nach Anspruch 3, dadurch gekennzeichnet, daß die beiden an der Rohrachse (9) axial verschiebbar gelagerten Kulissen (12, 13) gegenüber der Rohrachse (9) verdrehgesichert sind.

## Claims

1. A device on a steering column for motor vehicles for adjusting the length and/or inclination thereof, with a casing tube (7) which receives a steering column and which is mounted on a guide rail (3) with positive locking so as to be displaceable in the longitudinal direction, wherein the guide rail (3) is pivotable about an axis which is situated transversely to the casing tube (7) and which is secured on a component (1) mounted on the chassis of the motor vehicle, **characterized in that** a tube shaft (9), in which a pin (5) projecting into the casing tube (7) is arranged, is secured to the guide rail (3) transversely to the casing tube (7), wherein the pin (5) projects through an elongate-hole recess (23) which is provided in the casing tube (7) and extends parallel to the axial direction of the casing tube and the longitudinal edges (24) of which are toothed, and a profiled member (26) meshing with the toothed longitudinal edges (24) against the force of at least one pre-stressed spring (28) is provided at the inner end of the pin (5), and an actuating lever (10) - by the actuation of which at least one slotted guide (12, 13) is displaceable in the direction of the tube shaft (9) - is mounted on the tube shaft (9), and the said slotted guide (13) is provided on the side facing the casing tube (7) with at least one toothed rail (17) which meshes with a toothed rail (22) provided on the stationary component (1).

2. A device according to Claim 1, **characterized in that** the actuating lever (10) is pivotable about the tube shaft (9).

3. A device according to Claim 1, **characterized in that** slotted guides (12, 13) are mounted on the tube shaft (9) on both sides of the actuating lever (10) and displaceable in the direction of the axis of the said tube shaft (9) by the pivoting of the actuating lever (10) are provided, wherein one slotted guide (12) remote from the casing tube (7) is connected to one end of the pin (5).

4. A device according to Claim 1, **characterized in that** the tube shaft (9) passes through a vertical elongate-hole recess (2) in the stationary component (1), and vertically extending toothed rails (22) are provided on both sides of the said elongate-hole recess (2) and mesh with the toothed rails (17) which are provided on the second slotted guide (13), and the teeth of the said toothed rails (17, 22) mesh with one another against the forces of at least one pre-stressed spring (19).

5. A device according to Claim 1 or 2, **characterized in that** the actuating lever (10) mounted pivotably on the tube shaft (9) rests on its side remote from the casing tube (7) against a stop (11) secured to the tube shaft (9).

6. A device according to Claim 1, **characterized in that** one end of the pin (5) projects with respect to the tube shaft (9) and the said projecting end carries a stop (15), and a stack of springs (14) is arranged between the said stop (15) and the first slotted guide (12).

7. A device according to Claim 1, **characterized in that** the end faces (16, 21) of the two slotted guides (12, 13) facing the actuating lever (10) are formed at least in part as helical faces, and the actuating lever (10) is provided with cams or rollers which rest on the said helical faces and run along them when the actuating lever (10) is pivoted.

8. A device according to Claim 1, **characterized in that** a nominal breaking point (31, 33), which interrupts the positively locking connexion between the casing tube (7) and the pin (5) in the event of a force - caused by an accident - acting axially upon the steering column, is provided in the region of the casing tube (7).

9. A device according to Claim 8, **characterized in that** the nominal breaking point (31) is provided on the pin (5) and is situated in the plane of the inner end of the tube shaft (9).

10. A device according to Claim 1 or 8, **characterized in that** the profiled member (26) provided on the inner end of the pin (5) is formed in two parts, wherein one part (34) is toothed and meshes with the toothed longitudinal edges (24), and wherein an opening (36) receiving the pin (5) starts from the inner end face of the said part (34) and the other part (35) connected to the pin rests on the first part (34), and the said two parts (34, 35) are connected by a shear pin (37) arranged parallel to the pin (5).

11. A device according to Claim 10, **characterized in that** the axis of the pin (5), that of the shear pin (37) and the longitudinal axis of the opening (36) open on one side are situated in one plane.

12. A device according to Claim 1, **characterized in that** the toothed longitudinal edges (24) of the elongate-hole recess (23) in the casing tube (7) are curved towards the inside of the casing tube (7).

13. A device according to Claim 1, **characterized in that** the casing tube (7) is provided with a lateral stop which is trapezoidal in cross-section and which is received by the guide rail (3) with positive locking.

14. A device according to Claim 1, **characterized in that** depressions (29) in the manner of ball sockets, in which ball joints (30) are arranged, are formed in the guide rail (3), the stop of the casing tube (7) received by the guide rail (3) resting against the flat circular faces of the said ball joints (30).

15. A device according to Claim 3, **characterized in that** the two slotted guides (12, 13) mounted axially displaceably on the tube shaft (9) are prevented from rotating with respect to the tube shaft (9).

## Revendications

1. Dispositif sur une colonne de direction de véhicules, servant à la déplacer en longueur ou en inclinaison, comprenant un tube enveloppe (7), recevant la colonne de direction, monté de façon à pouvoir coulisser par complémentarité de forme sur un rail de guidage (3) dans le sens de la longueur, le rail de guidage (3) pouvant pivoter autour d'un axe perpendiculaire au tube enveloppe (7), axe qui est fixé sur une pièce constitutive (1) disposée sur le châssis du véhicule,
caractérisé en ce que
l'on fixe perpendiculairement au tube enveloppe (7) sur le rail de guidage (3) un axe tubulaire (9), dans lequel se trouve une tige (5) qui pénètre dans le tube enveloppe (7), la tige (5) pénétrant à travers un évidement (23) en forme de trou oblong (23)prévu dans le tube enveloppe (7), et qui s'étend parallèlement à la direction axiale du tube enveloppe, évidement dont les bords longitudinaux (24) sont dentés et une pièce profilée (26), montée à l'extrémité intérieure de la tige (5), vient en engrènement avec les bords longitudinaux dentés (24) à l'encontre de la force d'au moins un ressort précontraint (28) et un levier d'actionnement (10) est monté sur l'axe tubulaire (9), levier par l'actionnement duquel on peut faire coulisser au moins une coulisse (12, 13) dans le sens de l'axe tubulaire (9), cette coulisse (13) présentant sur son côté tourné vers le tube enveloppe (7) au moins une nervure dentée (17), qui engrène avec une nervure dentée (22) prévue sur la pièce constitutive fixe (1).

2. Dispositif selon la revendication 1,
caractérisé en ce que
l'on peut faire pivoter le levier d'actionnement (10) autour de l'axe tubulaire (9).

3. Dispositif selon la revendication 1,
caractérisé en ce que
l'on prévoit des coulisses (12, 13) montées des deux côtés du levier d'actionnement (10) sur l'axe tubulaire (9) et qui peuvent coulisser dans le sens de leur axe en faisant pivoter le levier d'actionnement (10), l'une des coulisses (12), tournée à l'opposé du tube enveloppe (7) étant reliée à l'une des extrémités de la tige (5).

4. Dispositif selon la revendication 1,
caractérisé en ce que
- l'axe tubulaire (9) passe à travers un évidement vertical (2) en forme de trou oblong dans la pièce constitutive fixe (1),
- des deux côtés de cet évidement (2) en forme de trou oblong il est prévu des nervures dentées (22) qui s'étendent verticalement, nervures qui engrènent avec les nervures dentées (17, qui sont prévues sur la deuxième coulisse (13), et
- les dents de ces nervures dentées (17, 22) viennent en prise les unes dans les autres à l'encontre de l'action d'au moins un ressort précontraint (19).

5. Dispositif selon la revendication 1 ou 2,
caractérisé en ce que
le levier d'actionnement (10) qui est monté de façon à pouvoir pivoter sur l'axe tubulaire (9), repose sur son côté tourné à l'opposé du tube enveloppe (7) sur une butée (11) fixée sur l'axe tubulaire (9).

6. Dispositif selon la revendication 1,
caractérisé en ce que
- l'une des extrémités de la tige (5) fait saillie par rapport à l'axe tubulaire (9) et
- cette extrémité saillante porte une butée (15) et un paquet de ressorts (14) est disposé entre cette butée (15) et la première coulisse (12).

7. Dispositif selon la revendication 1,
caractérisé en ce que
- les côtés frontaux (16, 21) des deux coulisses (12, 13) qui sont tournés vers le levier d'actionnement (10) sont constitués au moins en partie sous la forme de surfaces filetées et
- le levier d'actionnement (10) présente une came ou un galet qui repose sur ces surfaces filetées et qui roulent le long du levier d'actionnement (10) lors du pivotement de celui-ci.

8. Dispositif selon la revendication 1,
caractérisé en ce que
dans la zone du tube enveloppe (7) il est prévu un endroit (31, 33) destiné à la rupture, qui interrompt la liaison par complémentarité de forme entre le tube enveloppe (7) et la tige (5) dans le cas où il se produit une force agissant axialement sur la colonne de direction, causée par un accident.

9. Dispositif selon la revendication 8,
caractérisé en ce que
l'endroit (31) destiné à la rupture est prévu sur la tige (5), et se trouve dans le plan de l'extrémité intérieure de l'axe tubulaire (9).

10. Dispositif selon la revendication 1 ou 8,
caractérisé en ce que
une pièce profilée (26), prévue à l'extrémité intérieure de la tige (5), est constituée de deux parties, l'une des deux parties, la partie (34) étant dentée et engrenant avec les bords longitudinaux dentés (24), et dont une ouverture (36), partant de son côté frontal intérieur reçoit la tige (5) et l'autre partie, la partie (35), reliée à la tige, reposant sur la première partie (34), et ces deux parties (34, 35) étant reliées par un axe de cisaillement (37) qui se trouve parallèle à la tige (5).

11. Dispositif selon la revendication 10,
caractérisé en ce que
l'axe de la tige (5), celui de l'axe de cisaillement (37) et l'axe longitudinal de l'ouverture (36) ouverte d'un côté se trouve dans un même plan.

12. Dispositif selon la revendication 1,
caractérisé en ce que
les bords longitudinaux dentés (24) de l'évidement (23) en forme de trou oblong dans le tube enveloppe (7) sont repliés vers le côté intérieur du tube enveloppe (7)

13. Dispositif selon la revendication 1,
caractérisé en ce que
le tube enveloppe (7) présente un appendice latéral, en forme de trapèze en section transversale, qui est reçu en complémentarité de forme par le rail de guidage (3).

14. Dispositif selon la revendication 1,
caractérisé en ce que
dans le rail de guidage (3) on pratique des renfoncements (29) en forme de coquilles sphériques, dans lesquels se trouvent des calottes sphériques (30), sur les faces circulaires planes desquelles repose l'appendice reçu par le rail de guidage (3).

15. Dispositif selon la revendication 3,
caractérisé en ce que
les deux coulisses (12, 13) montées de façon à pouvoir coulisser axialement sur l'axe tubulaire (9) sont bloquées en rotation par rapport à l'axe tubulaire (9).
